# EUROPEAN PATENT APPLICATION

(11) **EP 1 439 204 A2**
(43) Date of publication of application: **21.07.2004**
(21) Application number: 04000625.6
(22) Date of filing: 14.01.2004
(51) Int. Cl.: C08K 5/098, C08K 5/3477, C08K 3/06, C08L 21/00, C08L 61/00, B60C 1/00

(54) **Rubber composition and pneumatic tire using the same**

(30) Priority: 16.01.2003 JP 2003008264
(71) Applicant: Sumitomo Rubber Industries Ltd., Kobe-shi, Hyogo-ken (JP)
(72) Inventor: Mizuno, Yoichi Sumitomo Rubber Industries Ltd., Kobe-shi Hyogo-ken (JP); Ohtsuki, Hirotoshi Sumitomo Rubber Industries Ltd., Kobe-shi Hyogo-ken (JP); Hirayama, Michio Sumitomo Rubber Industries Ltd., Kobe-shi Hyogo-ken (JP); Ishida, Hirokazu Sumitomo Rubber Industries Ltd., Kobe-shi Hyogo-ken (JP)
(74) Representative: Manitz, Finsterwald & Partner GbR

(57) **Abstract**

The present invention provides a rubber composition in which increase in elastic modulus due to thermal fatigue is small, change in properties is prevented and durability is significantly improved and a pneumatic tire having a strip comprising the rubber composition. More specifically, the present invention provides a rubber composition comprising 100 parts by weight of (A) a rubber component comprising natural rubber and/or isoprene rubber, 4 to 6 parts by weight of (B) sulfur, 0.5 to 2.0 parts by weight of (C) a resin containing resorcin or a derivative thereof, 0.5 to 2.0 parts by weight of (D) a compound capable of donating a methylene group, and (E) a cobalt metallic salt. The present invention also provides a pneumatic tire having a strip comprising the rubber composition, which is located on a breaker edge.

## Description

The present invention relates to a rubber composition and a pneumatic tire, more specifically a rubber composition for a breaker edge which is excellent in durability and a pneumatic tire having a strip comprising the composition, which is located on a breaker edge.

In recent years, demands to prolong the life span of a tire are strong and progress has been made in improving abrasion resistance of tread rubber and expanding tire tread width. However, along with such progress, heat generation of a tire increases and various problems occur. Specifically, the breaker edge rubber hardens, causing the rubber to peel off from the steel cord at the breaker edge and the elongation at break of the breaker edge rubber decreases, causing the breaker edge rubber to break. As a result, the phenomenon of tire burst tends to occur.

In the conventional breaker edge compound, a large amount of sulfur is compounded, as importance is placed on adhesion with the steel cord and heat generation. However, when a large amount of sulfur is compounded, crosslinking advances due to thermal fatigue and properties decrease significantly.

Also, in addition to influence of mechanical fatigue of a tire, breaker edge rubber particularly suffers extremely strong thermal fatigue. When the properties of a breaker edge rubber that has actually been run in the market are examined, elastic modulus increases significantly and particularly, elongation at break decreases a great deal.

As a means to improve the above, decreasing the heat generation of tread rubber is effective, but difficult to realize due to demands to improve abrasion resistance. Also, the art of providing a tread with a two-layer structure of a cap/base and applying rubber with low heat generation for the base is common. However, rubber with low heat generation has low reinforcement properties and when exposed in the last stages of abrasion, decrease in abrasion resistance, poor appearance due to abrasion (chipping) and cracking in the bottom of the grooves occur. Therefore, only an amount by which the rubber is not exposed to the surface when worn out can be used and the effect of decreasing heat generation is small.

In light of the above, employing a rubber compound for a breaker, which has durability to such tread rubber and structure with high heat generation, is an urgent task. As such a rubber compound, a rubber composition, in which novolak resin and a compound capable of donating a methylene group are compounded to a rubber component, has been developed (JP-B-3135650) but favorable balance of stiffness, heat generation and change in properties cannot be obtained, as in a rubber composition in which resorcin resin and a compound capable of donating a methylene group are compounded.

The present invention aims to provide a rubber composition, in which increase in elastic modulus due to thermal fatigue is small, change in properties is prevented and durability is significantly improved, by compounding a suitable amount of resorcin resin, which is excellent in adhesion to steel and textiles, and a compound capable of donating a methylene group.

Also, the present invention aims to provide a pneumatic tire having a strip comprising the rubber composition, which is located on a breaker edge.

Under such conditions, change in properties and increase in hardness were found to be prevented by adding resorcin resin and a compound capable of donating a methylene group. In addition, by specifying the amount of sulfur, the type and amount of carbon black and the content of cobalt in the cobalt metallic salt, a rubber composition having excellent balance in heat generation, stiffness and adhesion while preventing change in properties of the breaker edge rubber was found and the present invention was achieved.

That is, the present invention relates to a rubber composition comprising 100 parts by weight of (A) a rubber component comprising natural rubber and/or isoprene rubber, 4 to 6 parts by weight of (B) sulfur, 0.5 to 2.0 parts by weight of (C) a resin containing resorcin or a derivative thereof, 0.5 to 2.0 parts by weight of (D) a compound capable of donating a methylene group, and (E) a cobalt metallic salt.

The rubber composition preferably further comprises 50 to 70 parts by weight of (F) carbon black having iodine absorption of 70 to 120 (g/kg) and dibutyl phthalate (DBF) oil absorption of 70 to 125 (10⁻⁵ m³/kg), based on 100 parts by weight of rubber component (A).

In the rubber composition, the content of cobalt in the cobalt metallic salt (E) is preferably 0.05 to 0.2 part by weight based on 100 parts of weight of rubber component (A).

Also, the present invention relates to a pneumatic tire having a strip comprising the rubber composition, which is located on a breaker edge.

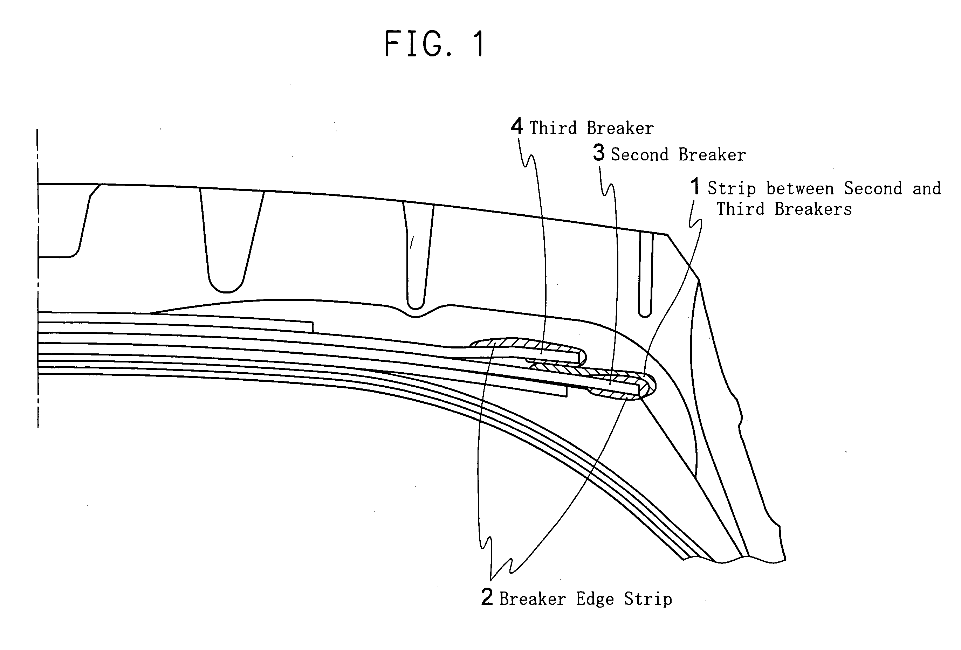

Fig. 1 is a diagram for explaining the location of the strip in the pneumatic tire of the present invention.

The rubber composition of the present invention comprises (A) a rubber component, (B) sulfur, (C) a resorcin resin, (D) a compound capable of donating a methylene group and (E) a cobalt metallic salt.

When considering heat generation of the rubber composition of the present invention, rubber component (A) contains natural rubber and/or polyisoprene rubber as the main component. In the present invention, "having natural rubber and/or polyisoprene rubber as the main component" means that the rubber component contains at least 90 % by weight of natural rubber and/or polyisoprene rubber. More preferably, the rubber component contains at least 95 % by weight of natural rubber and/or polyisoprene rubber. When the content is less than 90 % by weight, adhesion to steel is poor and heat generation is high.

Besides natural rubber and polyisoprene rubber, rubber component (A) can contain diene rubber such as butadiene rubber, styrene butadiene rubber, chloroprene rubber and acrylonitrile butadiene rubber as a second component.

Sulfur (B) is compounded in an amount of 4 to 6 parts by weight based on 100 parts by weight of rubber component (A). Preferably, 4.5 to 5.8 parts by weight are compounded. When the amount is less than 4 parts by weight, heat generation and adhesion are poor and when the amount is more than 6 parts by weight, heat-aging resistance decreases.

As resorcin resin (C), a resin containing resorcin or a resorcin derivative is used. An example of a resorcin derivative is modified resorcinol formaldehyde resin. Examples of commercially available products are Penacolite™ resin B-18-S and B-20 available from INDSPEC Chemical Corporation, Sumikanol™ 620 available from Sumitomo Chemical Co., Ltd., R-6 available from Uniroyal®, SRF 1501 available from Schenectady International, Inc. and Arofene™ 7209 available from Ashland Inc. Also, an example of resorcin is Resorcinol available from Sumitomo Chemical Co., Ltd.

Examples of the compound capable of donating a methylene group (D) are hexamethylene tetramine, hexamethoxy methylol melamine and derivatives thereof, aza dioxa bicyclooctane and paraformaldehyde. Examples of commercially available products are Cohedur™ A available from Bayer AG, Cyrez™ 966 and 964 available from American Cyanamid Co., Sumikanol™ 507 available from Sumitomo Chemical Co., Ltd. and M-3 available from Uniroyal®.

Resorcin resin (C) and the compound capable of donating a methylene group (D) are respectively compounded in an amount of 0.5 to 2 parts by weight based on 100 parts by weight of rubber component (A). Preferably, 0.75 to 1.8 parts by weight are compounded and more preferably, 0.75 to 1.5 parts by weight are compounded. When the amount is less than 0.5 part by weight, sufficient prevention of heat generation, stiffness and adhesion cannot be obtained and when the amount is more than 2 parts by weight, the rubber become extremely hard and elongation at break is poor.

As cobalt metallic salt (E), organic acid cobalt such as cobalt naphthenate, cobalt stearate, cobalt oleate and cobalt maleate can be used.

The rubber composition of the present invention preferably contains 0.05 to 0.2 parts by weight, more preferably 0.1 to 0.18 parts by weight, of cobalt in cobalt metallic salt based on 100 parts by weight of rubber component (A). When the amount is less than 0.05 part by weight, adhesion tends to be poor. When more than 0. 2 part by weight is added, further improvement in performance cannot be recognized and cost becomes high.

Furthermore, the rubber composition of the present invention can contain carbon black (F). As carbon black (F), a type of carbon black having iodine absorption of 70 to 120 (g/kg) and dibutyl phthalate (DBP) oil absorption of 70 to 125 (10⁻⁵ m³/kg) is preferably used. The iodine absorption of carbon black is more preferably 75 to 120 (g/kg) and the DBP oil absorption is more preferably 70 to 115 (10-⁵ m³/kg). When the iodine absorption is less than 70, reinforcement properties are low and elongation at break tends to become poor. When the iodine absorption is more than 120, heat generation tends to become high. Also, when the DBP oil absorption is less than 70, stiffness tends to be insufficient and when the DBP oil absorption is more than 125, elongation at breaks tends to be poor.

Carbon black (F) is preferably contained in an amount of 50 to 70 parts by weight, more preferably 55 to 65 parts by weight, based on 100 parts of the rubber component. When the amount is less than 50 parts by weight, stiffness tends to be insufficient and when the amount is more than 70 parts by weight, heat generation is high and elongation at break tends to decrease.

The pneumatic tire of the present invention is a tire in which the rubber composition of the present invention is used for the strip. For example, the pneumatic tire of the present invention can be prepared by forming the rubber composition of the present invention into a strip having a thickness of 1 mm and a width of 4 mm and placing the strip between the second breaker edge and the third breaker edge (strip 1 between second and third breakers) and on the breaker edge (breaker edge strip 2), as shown in Fig. 1. The strip between the second and third breakers is placed in order to alleviate strain of the breaker tip and improve durability. The breaker edge strip is mainly placed on the tip of the second breaker and the third breaker and is used with the purpose of achieving adhesion of the steel breaker tip to rubber and alleviating strain of the breaker tip.

Hereinafter, the present invention is explained in detail by means of Examples, but the present invention is not limited thereto.

The materials used in Examples and Comparative Examples are described below. With respect to carbon black, those shown in Table 1 were used.
Resorcin resin 1: Sumikanol 620 available from Sumitomo Chemical Co., Ltd.
Resorcin resin 2: RSM (approximately 60 % of resorcin and 40 % of fatty acid) available from Sumitomo Chemical Co., Ltd.
Compound capable of donating a methylene group 1: Sumikanol 507 (mixture of approximately 50 % of substance having a methylene group, silica and oil) available from Sumitomo Chemical Co., Ltd.
Compound capable of donating a methylene group 2: Nocceler H (hexamethylenetetramine), available from Ouchi Shinko Chemical Industrial Co., Ltd.
Cobalt metallic salt: cobalt stearate (containing 10 % of cobalt) available from Dainippon Ink and Chemicals, Incorporated
Antioxidant: Ozonone 6C available from Seiko Chemical Co., Ltd.
Zinc oxide: Ginrei R available from Toho Zinc Co., Ltd.
Sulfur: Sulfur available from Tsurumi Chemicals Co., Ltd.
Vulcanization Accelerator: Nocceler DZ (N,N'dicyclohexyl-2-benzothiazolylsulfenamide), available from Ouchi Shinko Chemical Industrial Co., Ltd.

**TABLE 1**

| | Manufacturer | Product Name | Iodine Absorption (g/kg) | DBP Oil Absorption (10⁻⁵ m³ /kg) |
|---|---|---|---|---|
| Carbon Black 1 | Mitsubishi Chemical Corporation | Diablack LH(N326) | ⁸⁴ | ⁷⁴ |
| | | | | |
| Carbon Black 2 | Mitsubishi Chemical Corporation | Diablack LI(N219) | ¹⁰⁷ | ⁷⁸ |
| | | | | |
| Carbon Black 3 | Mitsubishi Chemical Corporation | Diablack I(N220) | 118 | 114 |
| | | | | |
| Carbon Black 4 | Showa Cabot Co., Ltd. | SHOWBLACK N351 | ₇₃ | ₁₂₅ |
| | | | | |
| Carbon Black 5 | Tokai Carbon Co., Ltd. | Seast (N110) | 138 | 115 |

### EXAMPLES 1 to 24 and COMPARATIVE EXAMPLES 1 to 7

### (Preparation Process)

The base compound shown in Table 2 and the compounds shown in Tables 3 to 5, excluding sulfur and the vulcanization accelerator, were kneaded for 5 minutes at approximately 150°C using a Banbury mixer. Thereafter, sulfur and the vulcanization accelerator were added to the obtained rubber composition and kneading was conducted for 5 minutes at approximately 80°C using a twin-screw open roll.

The obtained rubber composition for a strip was molded and vulcanized under conditions of 150°C, 30 minutes and 20 kgf. Then, a truck tire of 11R22.5 was prepared.

**TABLE 2**

| Base Compound | (Parts by weight) |
|---|---|
| NR | 100 |
| Antioxidant | 2 |
| Zinc Oxide | 10 |
| Vulcanization Accelerator | 0.8 |

### (Test method)

(1) Viscoelasticity test (Heat generation (loss tangent), Elastic modulus (stiffness))
   A sample was prepared from the rubber composition for a strip of the obtained new tire. The loss tangent (tan-δ) and the elastic modulus (complex elastic modulus E∗) were measured under conditions of a temperature of 60°C, a frequency of 10 Hz and a dynamic strain of 1.0 % using a viscoelasticity spectrometer made by Iwamoto Corporation.
   Loss tangent was obtained from the reciprocal of the measured tan-δ and represented as an index by assuming the loss tangent of Comparative Example 1 to be 100. The larger the number value indicates that tan-δ is low, heat generation is low and performance is favorable. When the index is 100 or more, heat generation is low.
   The elastic modulus was also represented as an index by assuming the number value of Comparative Example 1 to be 100. The larger the index indicates that stiffness is high. When the index is 100 or more, stiffness is high.
(2) Tensile test (Elongation at break test)
   A sample was prepared from the rubber composition for a strip of the obtained new tire. Tensile test was conducted according to JIS-K6251 using a type 3 dumbbell and elongation at break EB (%) was measured. The elongation at break was represented as an index by assuming the value of Comparative Example 1 to be 100. The larger the number value indicates that elongation at break and burst resistance are excellent. When the index is 90 or more, elongation at break is excellent.
(3) Adhesion test
   A sample was prepared from the breaker edge of the obtained new tire and adhesion test between the second breaker and third breaker was conducted to determine the adhesion level between the steel cord and rubber. Basically, the test was conducted according to JIS K6256 except for the sample shape. The appearance of the peeled surface was evaluated in 5 levels. When evaluated as level 4 or higher, adhesion is excellent.
   Level 5: Interfacial peeling does not occur and cohesive failure of rubber occurs.
   Level 4: An extremely small part of the steel cord surface is interfacially peeled and exposed but durability is not affected.
   Level 3: Part of the steel cord surface is interfacially peeled and exposed and durability is insufficient for a new tire.
   Level 2: Interfacial peeling occurs in many places and durability is poor.
   Level 1: The surfaces are not adhered at all.
(4) Test as a tire
   A new tire was mounted on a 10 ton truck and run for 300,000 km. The above tests for elastic modulus, elongation at break and adhesion were conducted. With respect to elastic modulus, stiffness is high when the index is 130 or lower and elongation at break is excellent when the index is 70 or higher. Furthermore, elastic modulus is at most 1.4 times that of a new tire and elongation at break is at least 0.7 times that of a new tire. Adhesion is excellent when evaluated as level 3 or higher.

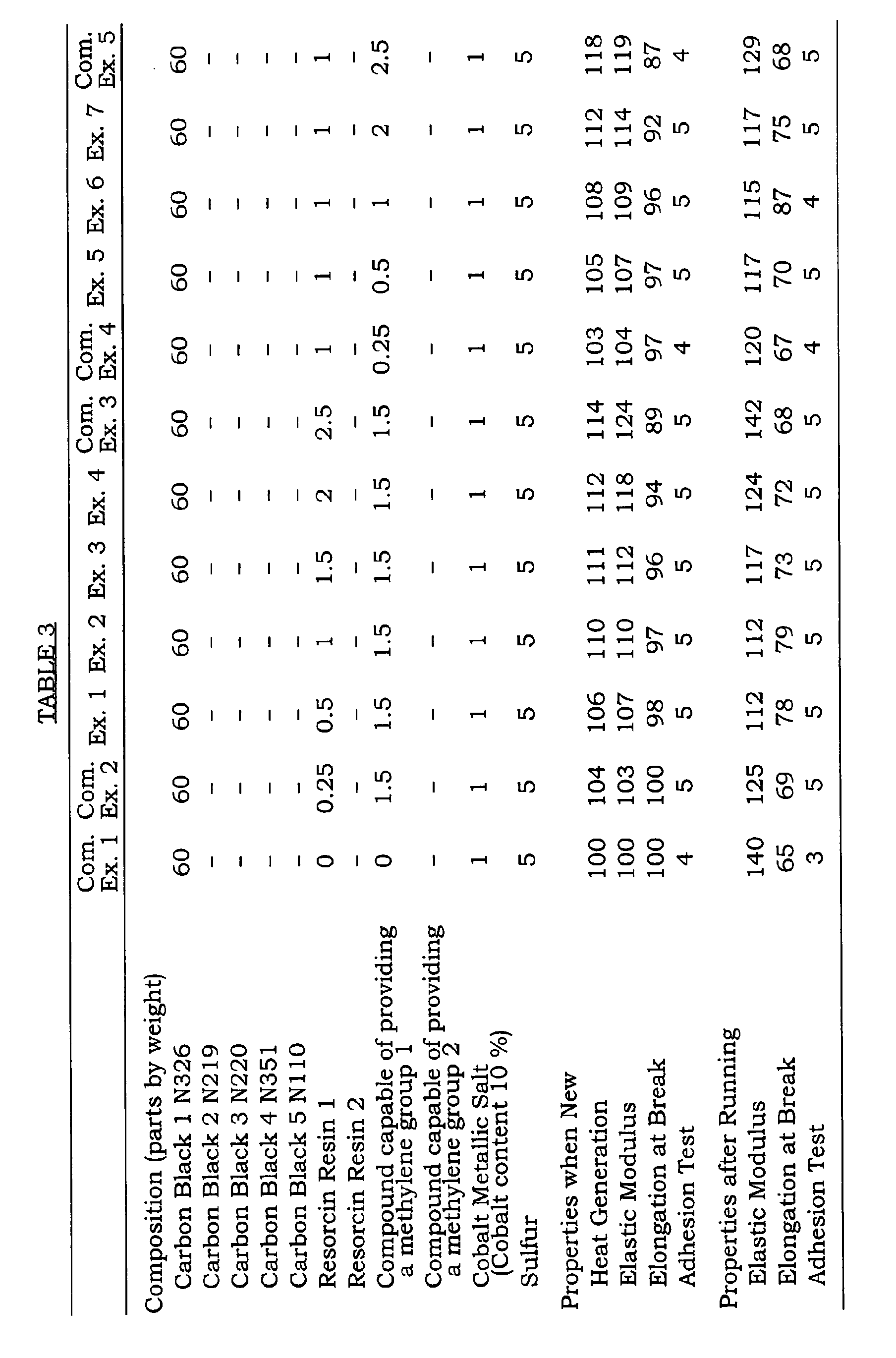

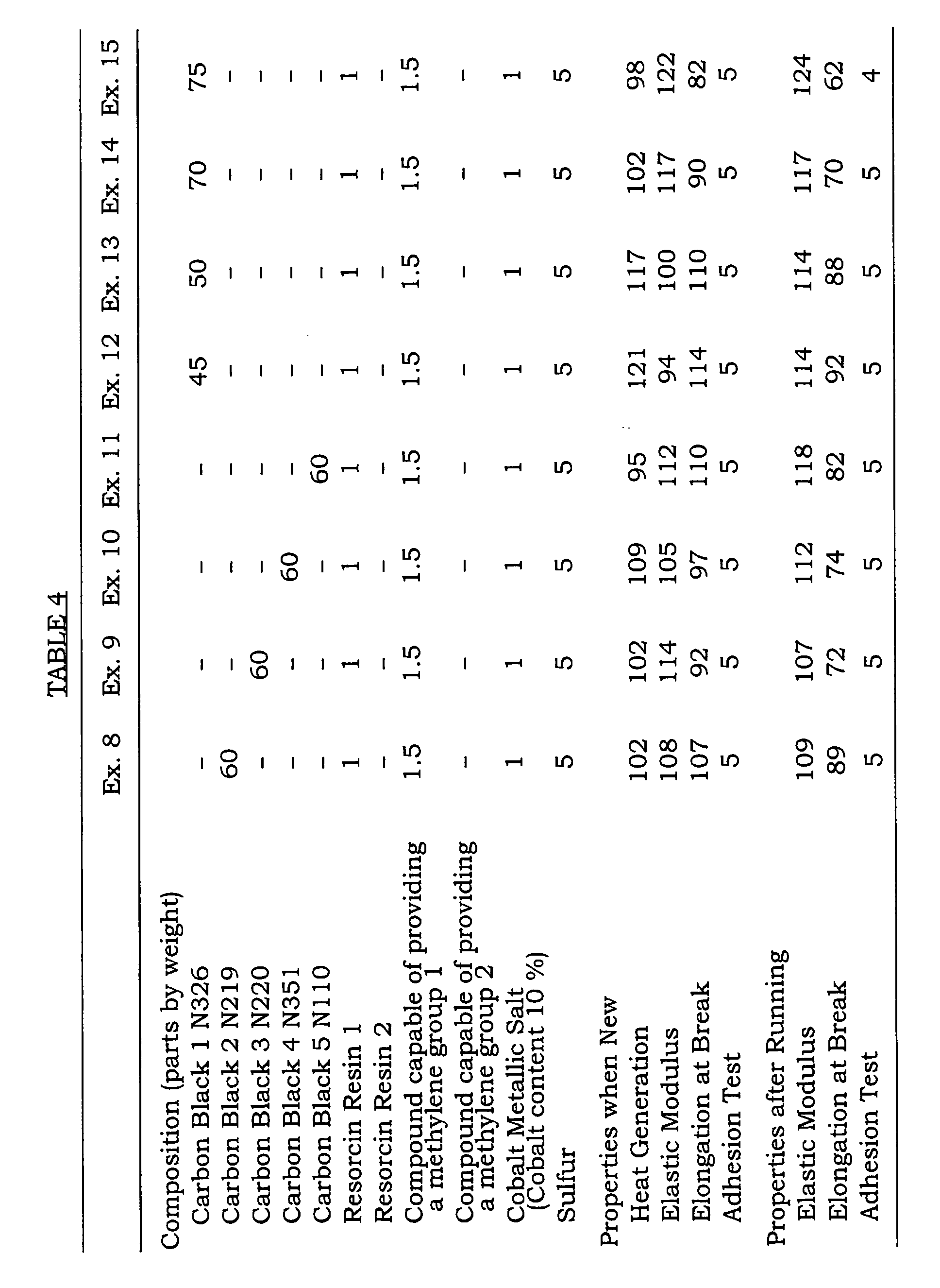

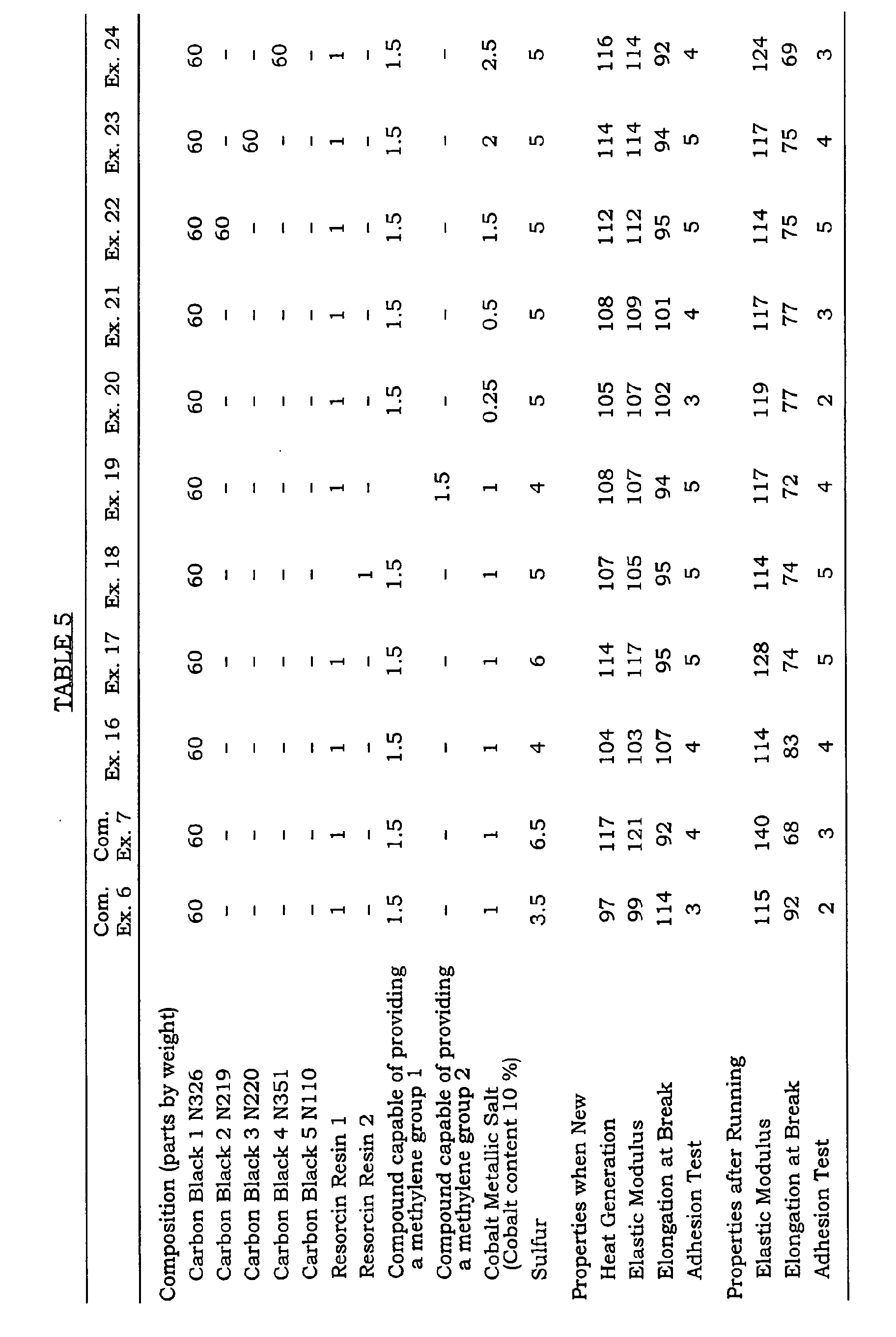

As indicated by the results of Examples 1 to 7 and Comparative Examples 1 to 5, heat generation decreased and elastic modulus and adhesion improved by adding a specific amount of resorcin resin and a compound capable of donating a methylene group. Particularly, the effect of preventing increase in elastic modulus and decrease in elongation at break after running the tire was large.

The amount of resorcin resin and the compound capable of donating a methylene group is preferably 0.5 to 2 parts by weight respectively based on 100 parts by weight of rubber component (A). When the amount was less than 0.5 part by weight, heat generation and prevention of change in properties were insufficient and when the amount was more than 2 parts by weight, elongation at break decreased.

As indicated by the results of Examples 2 and 16 to 17 and Comparative Examples 6 to 7, the preferable amount of sulfur is 4 to 6 parts by weight based on 100 parts by weight of rubber component (A). When the amount was less than 4 parts by weight, heat generation was high and adhesion was poor. When the amount was more than 6 parts by weight, heat resistance was poor and particularly, after running the tire, elongation at break decreased and elastic modulus increased.

As indicated by the results of Examples 2 and 12 to 15, the preferable amount of carbon black is 50 to 70 parts by weight. When the amount was less than 50 parts by weight, stiffness was insufficient and when the amount was more than 70 parts by weight, heat generation was high and elongation at break decreased.

As indicated by the results of Examples 2 and 8 to 11, carbon black having iodine absorption of 70 to 120 (g/kg) and DBP oil absorption of 70 to 125 (10⁻⁵ m³/ kg) is preferable as the carbon black. When the iodine absorption was lower than 70, reinforcement properties were low and elongation at break was poor and when the iodine absorption was higher than 120, heat generation was high. Also, when the DBP oil absorption was lower than 70, stiffness was insufficient and when the DBP oil absorption was higher than 125, elongation at break was poor.

From the results of Examples 2 and 18 to 19, the same properties were obtained regardless of the type of resorcin resin and compound capable of donating a methylene group.

As indicated by the results of Examples 2 and 20 to 24, the preferable amount of cobalt in the cobalt metallic salt is at least 0.05 part by weight based on 100 parts by weight of rubber component (A). When the amount was less than 0.05 part by weight, adhesion was poor. Also, when more than 0.2 part by weight was added, further improvement in properties could not be recognized and cost was high, thus being unfavorable.

The rubber composition of the present invention has low heat generation and is excellent in elastic modulus and adhesion. Particularly, the effect of preventing increase in elastic modulus and decrease in elongation at break after running the tire is large. The present invention is also excellent in durability as strip rubber.

## Claims

1. A rubber composition comprising
100 parts by weight of (A) a rubber component comprising natural rubber and/or isoprene rubber,
4 to 6 parts by weight of (B) sulfur,
0.5 to 2.0 parts by weight of (C) a resin containing resorcin or a derivative thereof,
0.5 to 2.0 parts by weight of (D) a compound capable of donating a methylene group, and
(E) a cobalt metallic salt.

2. The rubber composition of Claim 1 which further comprises 50 to 70 parts by weight of (F) carbon black having iodine absorption of 70 to 120 (g/kg) and dibutyl phthalate oil absorption of 70 to 125 (10⁻⁵ m³/kg), based on 100 parts by weight of rubber component (A).

3. The rubber composition of Claim 1 or 2, wherein the content of cobalt in said cobalt metallic salt (E) is 0.05 to 0.2 part by weight based on 100 parts of weight of rubber component (A).

4. A pneumatic tire having a strip comprising the rubber composition of Claim 1, 2 or 3, which is located on a breaker edge.
